# EUROPEAN PATENT APPLICATION

(11) **EP 2 789 598 A1**
(43) Date of publication of application: **15.10.2014**
(21) Application number: 14386008.8
(22) Date of filing: 10.04.2014
(51) Int. Cl.: C05F 5/00, C05F 3/00, C05F 17/00

(54) **Process for obtaining compost from wastewaters produced by olive oil mills**

(30) Priority: 12.04.2013 GR 2013100220
(71) Applicant: Manios, Thrassyvoulos, 71 409 Heraklion, Crete (GR)
(72) Inventor: The designation of the inventor has not yet been filed

(57) **Abstract**

A process to condense nutrients from wastewaters of olive oil mills, which after sun drying animal manure it applies olive oil wastewater. The mixture is further mixed and sun dried, and once the desired nutrient concentration is reached composting is performed in a closed vessel with the addition of organic wastes. The matter is sun dried again and then ground to specification. This process is applied to condense wastewaters from olive oil mills,

## Description

The invention is about a process to condense nutrients which are present in wastewaters from three phase olive oil mills.

There are two types of olive oil mills, the two phase and the three phase ones. The three phase olive oil mills produce olive oil, olive fruit seeds and skin and wastewater. The two phase installations produce olive oil and a mixture of olive oil fruit seeds, skin and wastewater, a mixture (pulp) very similar in physical appearance to sewage sludge.

Three phase olive oil mills are very common in Greece, Italy, Turkey and quite a few other oil producing Mediterranean countries. The management of the produced wastewater is a problem that has not been dealt in a viable manner, in spite the significant efforts of a large number of researchers and the investment of millions of Euros in related research.

Fertilizers are different from soil improvers, as they are produced from an organic waste composting process. Fertilizers are characterized by the large concentration of nutrients, mostly in inorganic form, which can be absorbed directly by plants. In addition, a large number of available fertilizers have significant concentrations (more of 10 % dry weight in the majority of cases) of the three most important nutrients for flora, i.e. nitrogen, phosphorus and potassium.

From these three nutrients, nitrogen is recycled naturally, through the nitrogen cycle, whereas extraction from the air is possible though energy intensive. For potassium and phosphorus there are difficulties as they are minerals which have to be mined, in which case reserves for them may last up to the end of this century. The need for alternative and efficient production and recycling / recovery processes is an issue of global importance.

In the olive mill wastewaters, the mean concentration of these three nutrients can be: 3.500 - 4.000 mg / L for potassium, 1.000 - 1.500 mg / L for phosphorus and 2.000 - 3.000 mg / L for nitrogen. This invention can be used to condense the nutrients from these wastewaters through the use of the most abundant energy source: the sun. This is a renewable and low cost energy source.

The state of the art in the production of fertilizers refers to the production of crushed fertilizer, which does not condense wastewaters and especially olive oil mill wastewater (CN1412155), where another patent (CN101486602) also in the production of fertilizers minimizes microbiological pathogens in the organic matter though the composting process. Another patent (CN102153266) proposes a drying process for wastewater using diatoms, whereas (EP1157972A1) uses ferrous cations and hydrogen peroxide for the treatment of olive oil mill wastewater. The patent FR2857086, uses a sun drying process for municipal wastewater, which is obviously not originating from a food process such as the olive oil mills. Patent WO9605145 is on the olive oil mills treatment with crushing and bentonite, whereas WO2005012815 is for a system for the development of composting windrows.

The suggested process for condensing nutrient concetration utilizes the sun for drying purposes and has the following phases:
- Manure (from cows, pigs, sheep, goats and poultry) are introduced in a sun drying hall.
- Manure is dried to allow the maximum absorption of olive mill wastewater.
- Olive mill wastewater is introduced to the manure substrate to increase the concentration of nutrients. A turning device in the sun drying hall will mix continuously the substrate accelerating therefore the drying process.
- The minimum substrate height in the sun drying hall can vary from 10 to 50 cm depending on the initial moisture content and the environmental conditions. More sun light allows the increase of the substrate height in the hall.
- After the introduction of the necessary quantity of olive mill wastewater to the substrate (the raw and dried manure) which has lead to an increase of the concentration of the nutrients to a desired level, the substrate will be composted.
- Composting will take place in a closed vessel with the addition of other organic wastes which have a high concentration of sugars, such as grape skins. Water addition may be required, to assist the microbiological decomposition.
- After composting is over and the manure has reached a steady state with the added organic wastes, the composted substrate will have a minimum moisture level of 40 %.
- Following this phase matter will then be re introduced to the sun drying hall for additional drying to reduce moisture levels below 10 %.
- The end product which has been dried will be ground to the desirable size so that can be used by fertilizer distributing machinery.

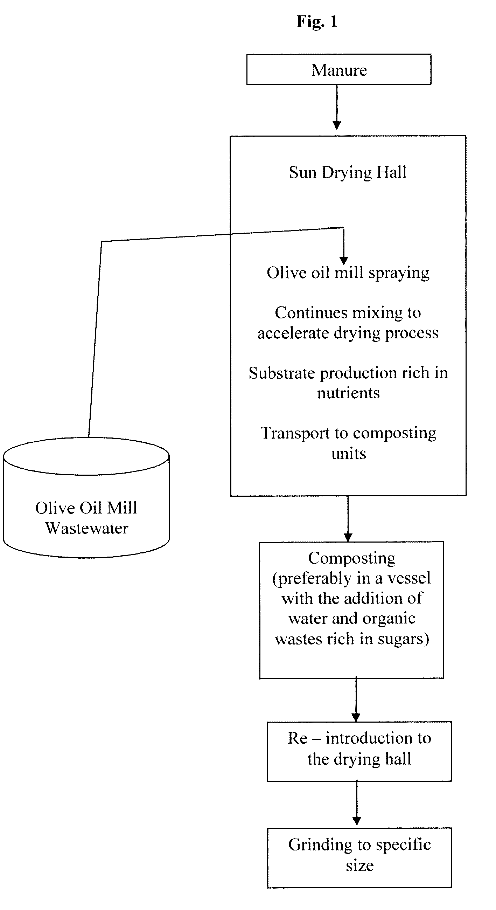

Drawing 1 shows the flow diagram of the process.

## Claims

1. A nutrients condensing process applying olive oil mills wastewater to organic waste such as animal manure, **characterized by** the use of a sun drying based process.

2. The process according to claim 1 is **characterized by** the introduction of animal manure as a substrate in a drying hall.

3. The process according to claim 2 is **characterized by** the drying of the manure.

4. The process according to claim 3 is **characterized by** the application of olive mill wastewater to the animal manure. in the drying hall

5. The process according to claim 4 is **characterized by** the continuous mixing of the manure inside the sun drying hall together with the continuous addition of olive mill wastewater.

6. The process according to claim 5 is **characterized by** its arrest once the desired concentration of nutrients has been reached.

7. The process according to claim 6 is **characterized by** the composting of the substrate in a closed vessel composter, with the addition of organic wastes rich in sugars such as grape skins and water.

8. The process according to claim 7 is **characterized by** the re-introduction of the composted substrate inside the drying hall for further moisture reduction.

9. The process according to claim 8 is **characterized by** the grinding of the produced matter to the desired size, for use by fertilizer spreading machinery.

10. The process according to claims 1, 2, 3, 4, 5 and 6 is **characterized by** the introduction of nutrients to the substrate though the evaporation of olive mill wastewater inside a sun drying hall.

11. The process according to claim 7 is **characterized by** the composting of the substrate in closed vessel systems with organic waste containing a large amount of sugars.

12. The process according to claims 8 and 9 is **characterized by** further drying of the compost produced in claim 7, and its grinding to the desirable size.
